# EUROPÄISCHE PATENTSCHRIFT

(11) **EP 2 493 627 B1**
(45) Veröffentlichungstag und Bekanntmachung des Hinweises auf die Patenterteilung: **02.10.2013**
(21) Anmeldenummer: 10750055.5
(22) Anmeldetag: 26.08.2010
(51) Int. Cl.: B65G 49/04, B05C 3/10

(54) **ANLAGE ZUM BEHANDELN UND BEFÖRDERN VON GEGENSTÄNDEN**
APPARATUS FOR TRANSPORTING AND PROCESSING OBJECTS
APPAREIL DE TRANSPORT ET DE TRAITEMENT DES OBJETS

(30) Priorität: 29.10.2009 DE 102009051316
(43) Veröffentlichungstag der Anmeldung: 05.09.2012
(73) Patentinhaber: Eisenmann AG, 71032 Böblingen (DE)
(72) Erfinder: SCHNEIDER, Gerd, 71116 Gärtringen (DE)
(74) Vertreter: Ostertag, Ulrich
(86) Internationale Anmeldenummer: PCT/EP2010/005236
(87) Internationale Veröffentlichungsnummer: WO 2011/050876

(56) Entgegenhaltungen:
- WO-A1-2005/115886
- DE-A1- 10 054 366
- DE-A1- 10 241 026
- US-A1- 2003 056 723

## Beschreibung

Die Erfindung betrifft eine Anlage zum Behandeln, insbesondere zum kataphoretischen Tauchlackieren, von Gegenständen, insbesondere von Fahrzeugkarosserien, mit
a) mindestens einem Behandlungsbehälter, in dem die Gegenstände mit einem Behandlungsmedium beaufschlagbar sind;
b) mindestens einem Transportwagen, welcher mindestens einen Gegenstand in einer Translationsbewegung durch die Anlage führt, diesen dabei in den Behandlungsbehälter ein- und aus diesem ausbringt und seinerseits umfasst:
   ba) ein verfahrbares Fahrwerk;
   bb) mindestens einen an dem Fahrwerk angelenkten Schwenkarm;
   bc) eine an dem Schwenkarm befestigte Halterung für den Gegenstand;
   bd) eine Antriebseinrichtung für die Translationsbewegung des Fahrwerks;
   be) eine Antriebseinrichtung für die Schwenkbewegung des Schwenkarms;
   bf) eine Gewichts-Ausgleichseinrichtung, mit welcher die Kraft, die zum Schwenken des Schwenkarms erforderlich ist, reduziert ist und die einen Energiespeicher umfasst, in dem die mit der Absenkung des Gegenstands verbundene Energie zwischenspeicherbar und aus dem die zwischengespeicherte Energie bei der Aufwärtsbewegung des Gegenstandes wieder abrufbar ist.

Eine gattungsgemäße Vorrichtung wird in US 2003/056723 gezeigt.

In Lackieranlagen für Fahrzeugkarosserien, aber auch für andere Gegenstände, gibt es eine Vielzahl von Behandlungsbehältern, in denen die Gegenstände mit einer Behandlungsflüssigkeit oder einem anderen, auch gasförmigen, Behandlungsmedium beaufschlagt werden. Unter "Beaufschlagen" wird hier sowohl das Schwallen und das Bespritzen als auch das Eintauchen der Gegenstände mit dem bzw. in das Behandlungsmedium verstanden. "Schwallen" ist ein Vorgang, bei dem verhältnismäßig große Mengen Behandlungsmedium auf die Gegenstände pro Zeiteinheit aufgebracht werden. Ein solches Schwallen wird beispielsweise zur Grobreinigung von Fahrzeugkarosserien in der sog. Vorbehandlungszone eingesetzt. Unter Bespritzen wird die Erzeugung eines sehr feinen Sprühnebels verstanden, der in alle Winkel, Ritzen und sonstigen unzugänglichen Stellen der behandelten Gegenstände eindringt. Derartige Spritzvorgänge finden beispielsweise sowohl zur Reinigung als auch zur Phosphatierung, Passivierung oder Aktivierung von Oberflächen sowie zum Abspülen einer Behandlungsflüssigkeit statt. Beim Eintauchen werden die Gegenstände, wie der Name es sagt, unter den Spiegel eines Bades des Behandlungsmediums, im Allgemeinen einer Behandlungsflüssigkeit, gebracht. Eintauchvorgänge finden sich beispielsweise ebenfalls beim Reinigen und den sonstigen in der Vorbehandlungszone stattfindenden Prozessen, aber auch im Lackiervorgang selbst.

Von besonderer Bedeutung bei derartigen Anlagen ist die Art und Weise, wie die Gegenstände durch die Anlage hindurchgeführt und in die einzelnen Behandlungsbehälter ein- bzw. aus diesen ausgebracht werden. Die dabei eingesetzte Kinematik der Gegenstände sollte zum ersten sicherstellen, dass die Gegenstände in optimaler Weise von dem Behandlungsmedium erreicht, aber auch wieder vollständig von dem Behandlungsmedium befreit werden können. Zum zweiten sollte die Kinematik der Gegenstände so sein, dass die Länge der einzelnen Behandlungsbehälter und damit auch die Länge der Gesamtanlage möglichst kurz bleibt.

Eine weitere Forderung ist die, die Kräfte, die beim Ein- und Ausbringen des Gegenstandes in den Behandlungsbehälter erforderlich sind, und damit den Energieaufwand möglichst klein zu halten. Grundsätzlich hat sich in diesem Zusammenhang die in der DE-U-201 05 676 beschriebene Anlage bewährt. Die Bewegungsfreiheitsgrade, welche der in dieser Anlage eingesetzte Transportwagen für die Gegenstände zur Verfügung stellt, erfüllt die oben genannten Anforderungen optimal. Um die Kraft, die zum Verschwenken der Gegenstände erforderlich ist, möglichst gering zu halten, verwendet die bekannte Anlage Gegengewichte. Derartige Gegengewichte können jedoch nicht verhindern, dass die mit dem Absinken der Gegenstände verbundene Energie verlorengeht und beim Anheben der Gegenstände wieder neu aufgebracht werden muss. Wenn unterschiedliche Gegenstände mit unterschiedlichem Gewicht in der Anlage behandelt werden sollen, ist eine optimale Anpassung des Gegengewichtes ohnehin schwierig oder gar unmöglich.

Aus diesem Grunde wurde bei der aus der DE 102 10 941 B4 bekannten Anlage eine andere Gewichts-Ausgleichseinreichtung eingesetzt, nämlich ein Energiespeicher, in dem die beim Absenken des Gegenstands freiwerdende Energie zwischenspeicherbar und aus dem die zwischengespeicherte Energie zur Unterstützung der Aufwärtsbewegung des Gegenstands wieder abrufbar ist. Konkret ist in dieser Druckschrift dabei an einen gasgefüllten, insbesondere luftgefüllten Balg gedacht, wobei die Federkennlinie des Balgs individuell an das Gewicht des jeweils von dem Transportwagen getragenen Gegenstandes anpassbar ist. Die Schwenkbewegung des Schwenkarms wird durch einen elektrischen Getriebemotor bewirkt.

Diese bekannte Anlage erfüllt die oben erläuterten Anforderungen sehr gut, ist aber mit einem gewissen apparativen Aufwand verbunden.

Aufgabe der vorliegenden Erfindung ist es, eine Anlage der eingangs genannten Art so auszugestalten, dass sie insgesamt kostengünstiger und weniger störanfällig ist.

Diese Aufgabe wird erfindungsgemäß dadurch gelöst, dass
c) die Antriebseinrichtung für den Schwenkarm und die Gewichts-Ausgleichseinrichtung zusammen von mindestens einer hydraulisch arbeitenden Kolben-Zylinder-Einheit gebildet sind, die einen ersten Arbeitsraum besitzt, der sich bei der Abwärtsbewegung des Schwenkarms verkleinert und in einem geschlossenen System mit einem ersten Druckspeicher verbunden ist, sowie einen zweiten Arbeitsraum, der sich bei der Abwärtsbewegung des Schwenkarms vergrößert, mit einer Quelle unter Druck stehender Hydraulikflüssigkeit verbunden ist und bei der Aufwärtsbewegung des Schwenkarms in einen Flüssigkeitstank entleerbar ist;
   wobei
d) der Druck der Hydraulikflüssigkeit in dem ersten Druckspeicher ausreicht, den Schwenkarm samt Gegenstand nach oben zu schwenken, wenn der Druck im zweiten Arbeitsraum der Kolben-Zylinder-Einheit unter einen betsimmten Druck abgesenkt ist.

Erfindungsgemäß wurde erkannt, dass eine hydraulisch arbeitende Kolben-Zylinder-Einheit sowohl als Antriebseinrichtung für die Schwenkbewegung des Schwenkarms als auch als Gewichts-Ausgleichseinrichtung dienen kann. Aufgrund dieser Doppelfunktion der Kolben-Zylinder-Einheit kann der apparative Aufwand, der mit der Herbeiführung der Schwenkbewegung des Schwenkarmes verbunden ist, gegenüber dem Stande der Technik erheblich reduziert und die Störanfälligkeit vermindert werden. Dadurch, dass der erste Arbeitsraum in einem geschlossenen System mit einem Druckspeicher verbunden ist, wird die Hydraulikflüssigkeit zwischen dem ersten Arbeitsraum der Kolben-Zylinder-Einheit und dem ersten Druckspeicher ohne Einsatz einer Hydraulikpumpe hin- und her bewegt, wie dies die Schwenkbewegung des Schwenkarmes mit sich bringt. Wird der erste Arbeitsraum der Kolben-Zylinder-Einheit entleert und damit der erste Druckspeicher gefüllt, so wird in diesem Energie zwischengespeichert, die dann bei der umgekehrten Bewegung der Hydraulikflüssigkeit aus dem ersten Druckspeicher in den ersten Arbeitsraum der Kolben-Zylinder-Einheit wiedergewonnen werden kann. Ob eine Aufwärts- oder ein Abwärtsbewegung des Schwenkarmes stattfindet, hängt von den Druckverhältnissen im zweiten Arbeitsraum der Kolben-Zylinder-Einheit ab, der wahlweise zur Bewegung gegen den Druck im ersten Arbeitsraum mit der Quelle flüssiger Hydraulikflüssigkeit oder zur gegenläufigen Bewegung durch Verbindung mit dem Flüssigkeitstank mehr oder weniger drucklos gemacht werden kann.

Bei der Erfindung ist zudem gewährleistet, dass in jedem Falle, auch im Falle eines Systemfehlers oder Stromausfalles, der Schwenkarm mit dem Gegenstand nach oben aus dem Behandlungsmedium herausgehoben werden kann. Dies stellt ein wertvolles Sicherheitsmerkmal dar.

Die Quelle unter Druck stehender Hydraulikflüssigkeit kann eine Hydraulikpumpe und einen zweiten Druckspeicher umfassen. Der zweite Druckspeicher, der in geeigneten Zeiten gefüllt wird, unterstützt dabei die Wirkung der Hydraulikpumpe.

Jeder Druckspeicher umfasst vorzugsweise eine Membran, welche seinen Innenraum in einen mit Hydraulikflüssigkeit gefüllten ersten Arbeitsraum und einen mit Gas gefüllten zweiten Arbeitsraum unterteilt. Bei der Hin- und Her-Bewegung der Hydraulikflüssigkeit zwischen dem ersten Arbeitsraum der Kolben-Zylinder-Einheit und dem ersten Druckspeicher wird also zur Speicherung bzw. Freisetzung der Energie das Gas im ersten Druckspeicher komprimiert oder entspannt.

Im Strömungsweg zwischen dem zweiten Arbeitsraum der Kolben-Zylinder-Einheit und der Druckquelle oder im Strömungsweg zwischen dem ersten Arbeitsraum der Kolben-Zylinder-Einheit und dem ersten Druckspeicher kann ein Proportionalventil liegen, über welches die Geschwindigkeit der Schwenkbewegung des Schwenkarmes einstellbar ist. Dabei können ggfs. für die Aufwärts- und die Abwärtsbewegung des Schwenkarms unterschiedliche Drosselventile verwendet werden.

Die Hydraulikflüssigkeit muss mit dem Behandlungsmedium kompatibel sein. Im Automobilbereich, wo insbesondere Lacke als Behandlungsmedium infrage kommen, eignet sich hierfür insbesondere ein Wasser-Glykol-Gemisch mit einem Wasseranteil von mehr als 35 Gewichtsprozent. Sollten geringe Mengen dieser Hydraulikflüssigkeit augrund von Undichtigkeiten im Hydrauliksystem in das Behandlungsmedium gelangen, so ist dies unschädlich.

Für einige im vorliegenden Zusammenhang interessierende Hydraulikflüssigkeiten sind keine gut arbeitenden Proportionalventile verfügbar. In diesen Fällen empfiehlt es sich, dass die Hydraulikpumpe eine frequenzgeregelte Zweiquadrantenpumpe ist. Hier wird die Bewegungsgeschwindigkeit des Schwenkarmes über die Frequenz eingestellt.

Bei Verwendung einer derartigen frequenzgeregelten Zweiquadrantenpumpe kann die Hydraulikflüssigkeit insbesondere auch reines Wasser sein. Da sehr viele Behandlungsflüssigkeiten, insbesondere auch Lacke, ohnehin Wasser als Lösungsmittel enthalten, ist es bei einer Undichtigkeit im Hydrauliksystem völlig unproblematisch, wenn aus diesem etwas Wasser in das Behandlungsmedium gelangt.

Selbstverständlich kann das geschlossene Hydrauliksystem, welches den ersten Arbeitsraum der Kolben-Zylinder-Einheit und den ersten Druckspeicher umfasst, im Laufe der Zeit durch Leckagen an Druck verlieren. In diesem Falle sollte es möglich sein, den ersten Druckspeicher zeitweise mit einer Hydraulikpumpe verbinden zu können, um den ursprünglichen Druck wieder herzustellen.

Üblicherweise sind die Zeiten, in denen der Schwenkarm während des Durchganges des Transportwagens durch die Transportanlage verschwenkt wird, vergleichsweise kurz. Die Kapazität der Hydraulikpumpe lässt sich dann dadurch kleinhalten, dass der zweite Druckspeicher während der Stillstandszeiten der Kolben-Zylinder-Einheit mit der Hydraulikpumpe verbindbar ist. In diesen Stillstandszeiten füllt die Hydraulikpumpe den Druck im zweiten Druckspeicher auf, der zu einem späteren Zeitpunkt dann zur Unterstützung der Hydraulikpumpe zur Verfügung steht.

Ein Ausführungsbeispiel der Erfindung wird nachstehend anhand der Zeichnung näher erläutert; es zeigen
- Figur 1: perspektivisch die zum Verständnis der vorliegenden Erfindung erforderlichen Komponenten eines Transportwagens;
- Figur 2: die Seitenansicht des Transportwagens von Figur 1;
- Figur 3: die Draufsicht auf den Transportwagen von Figur 1;
- Figur 4: ein Schema der Hydraulik, die bei dem Transportwagen der Figur 1 eingesetzt wird;
- Figur 5: ein alternatives Hydraulikschema für den Transportwagen der Figur 1.

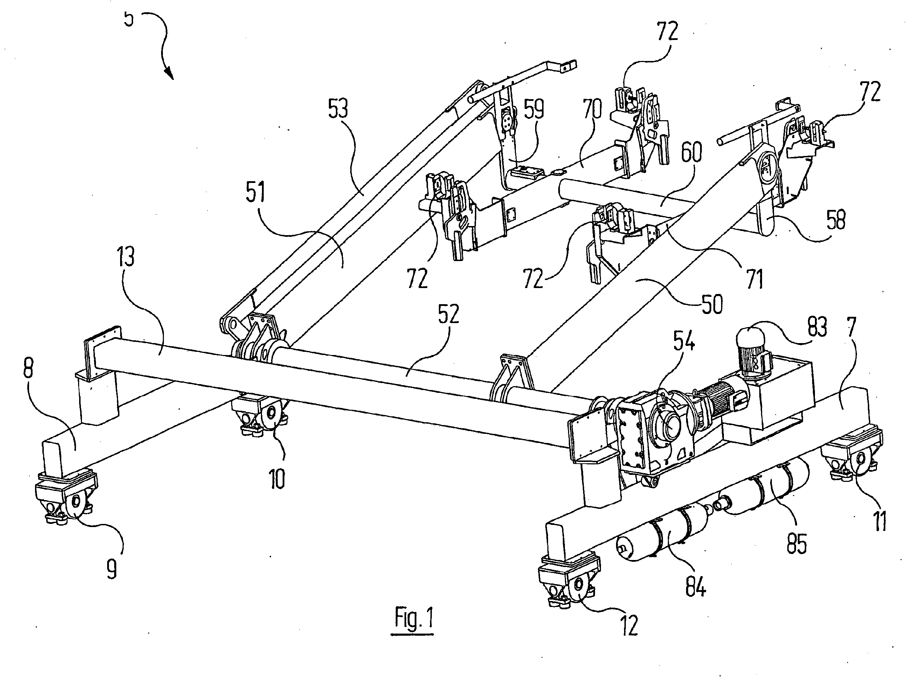

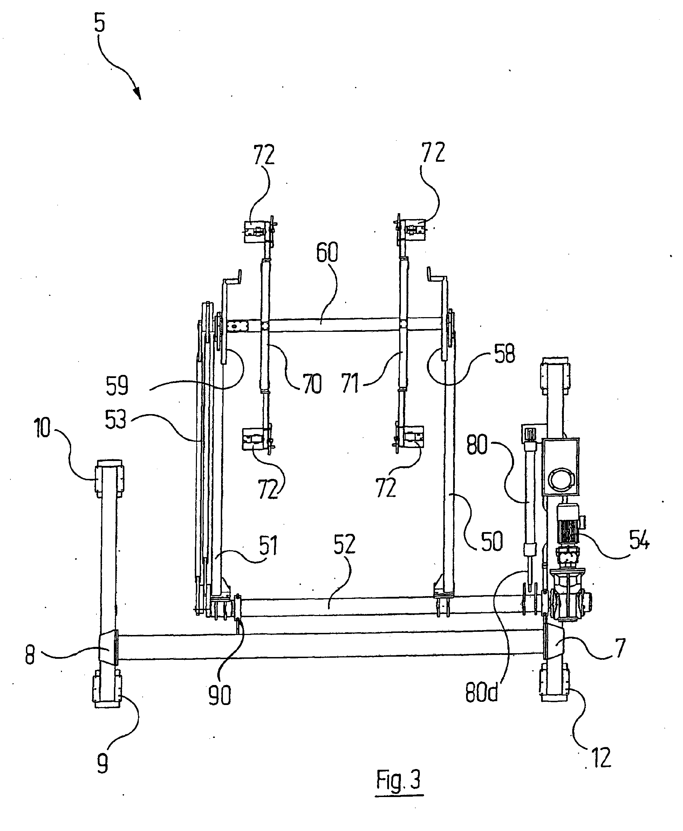

Zunächst wird auf die Figuren 1 bis 3 Bezug genommen. Der dort insgesamt mit dem Bezugszeichen 5 gekennzeichnete Transportwagen ist in seinen grundsätzlichen Funktionen und in seinem grundsätzlichen Aufbau aus der DE-U-201 05 676 bekannt. Um die Figuren und die zugehörige Beschreibung nicht zu überfrachten, sind in der Zeichnung verschiedene Komponenten des Transportwagens 5 weggelassen. Bezüglich dieser Komponente wird ergänzend auf die DE-U-201 05 676 verwiesen.

Der Transportwagen 5 besitzt ein Fahrwerk in Form zweier Längstraversen 7, 8, an deren Unterseite jeweils zwei Räder 9, 10 bzw. 11, 12 um eine horizontale Achse drehbar gelagert sind. Zusätzlich sind die Räder 9 bis 12 jeweils mit Hilfe eines einzelnen nicht dargestellten Drehschemels um eine vertikale Achse verdrehbar, so dass die Ausrichtung der Räder 9 bis 12 gegenüber den jeweiligen Längstraversen 7, 8 verändert werden kann.

Die Räder 9, 10 rollen auf einer ersten, nicht dargestellten Lauffläche und die Räder 11, 12 auf einer hierzu parallelen zweiten und ebenfalls nicht dargestellten Lauffläche ab. Die Laufflächen sind ihrerseits auf jeweils einem Profilträger montiert, der von einem nicht dargestellten Stahlbau getragen wird.

Die Räder 9 bis 12 sind in geeigneter Weise, wie dies im Einzelnen der oben genannten DE-U-201 05 676 zu entnehmen ist, so geführt, dass sie dem Verlauf der Laufflächen 13, 14 folgen.

Die beiden Längstraversen 7, 8 sind miteinander durch eine Quertraverse 13 verbunden. Eine zur Quertraverse 13 parallele Welle 52, die senkrecht zu den Längstraversen 7, 8 und damit senkrecht zur Bewegungsrichtung des Transportwagens 5 verläuft, ist mit einem Ende an der Längstraverse 7, mit dem anderen an einem von der Quertraverse 13 getragenen Lagerhalter 90 gelagert ist. Auf der Welle 52 sind zwei parallele Schwenkarme 50, 51 drehschlüssig angebracht, an deren von der Welle 52 entfernten Enden jeweils eine Lasche 58, 59 verschwenkbar gelagert ist. Die in Figur 1 linke Lasche 59 kann mithilfe eines Getriebemotors 54, der auf der Längstraverse 7 etwa in deren mittlerem Bereich befestigt ist, über eine in der hohlen Welle 52 verlaufende Innenwelle sowie über das schematisch dargestellte Gestänge 53, welches parallel zum Schwenkarm 51 verläuft, verschwenkt werden. Die genaue Art und Weise, wie die Verschwenkung der Lasche 59 erzeugt wird, ist jedoch im vorliegenden Zusammenhang unberheblich.

Die von den Schwenkarmen 50, 51 entfernten Enden der Laschen 58, 59 sind durch eine senkrecht zur Bewegungsrichtung des Transportwagens 5 verlaufende Quertraverse 60 miteinander verbunden, die ihrerseits starr mit dem mittleren Bereich zweier zueinander und zur Bewegungsrichtung paralleler Tragestreben 70, 71 starr verbunden ist. An den gegenüberliegenden Enden jeder Tragestrebe 70, 71 sind Befestigungsvorrichtungen 72 angebracht, mit deren Hilfe eine nicht dargestellte, zu behandelnde Fahrzeugkarosserie an den Tragestreben 70 festgelegt werden kann.

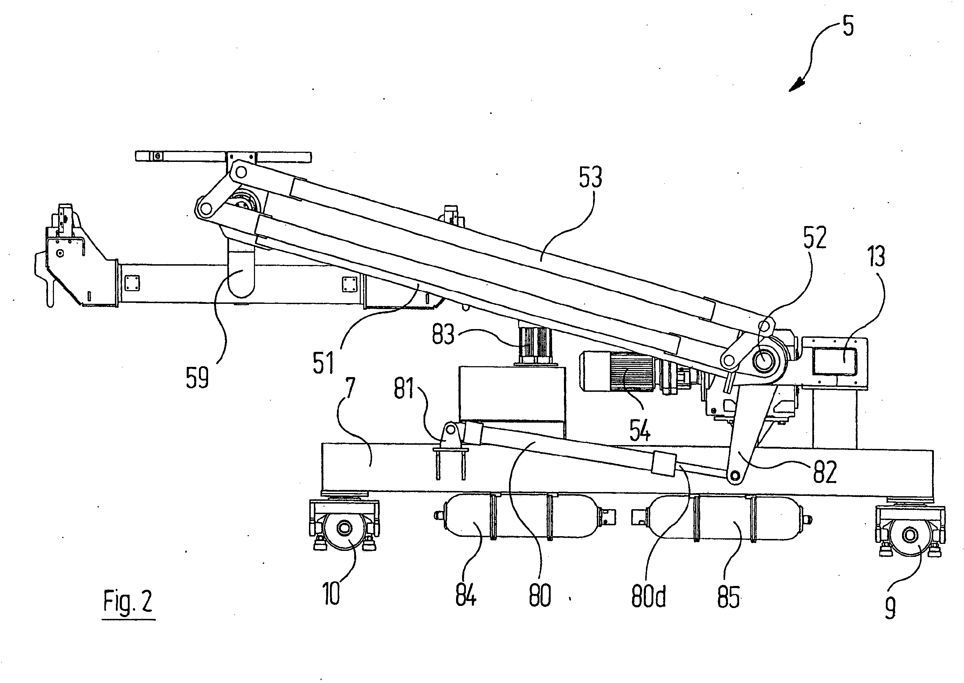

Als Antrieb für die Schwenkbewegung der beiden Schwenkarme 50, 51 um die Welle 52 dient eine hydraulische Kolben-Zylinder-Einheit 80, die besonders gut in Figur 2 zu erkennen ist. Die Kolben-Zylinder-Einheit 80 ist mit einem Ende verschwenkbar mit einer Lasche 81 verbunden, die ihrerseits starr an der Längstraverse 7 angebracht ist. Das das andere Ende der Kolben-Zylinder-Einheit 80 bildende freie Ende der Kolbenstange 80d ist verschwenkbar mit einer Lasche 82 verbunden, die ihrerseits eine drehschlüssige Verbindung zu der Welle 52 besitzt. Ersichtlich ist es auf diese Weise möglich, durch Ein- und Ausfahren der Kolbenstange 80d der Kolben-Zylinder-Einheit 80 die beiden Schwenkarme 50, 51 um die Welle 52 zu verschwenken. Diese Schwenkbewegung kann, wie es in der DE-U-201 05 676 beschrieben ist, zum Ein- und Austauchen der an den Tragestreben 70, 71 befestigten Fahrzeugkarosserie in ein Behandlungsbad oder dgl. verwendet werden.

Der für die Kolben-Zylinder-Einheit 80 benötigte Hydraulikdruck wird durch eine elektrische Hydraulikpumpe 83 erzeugt.

Zum hydraulischen Antriebssystem des Transportwagens 5 gehören außerdem zwei Druckspeicher 84, 85, die an der Unterseite der Längstraverse 7 angeordnet sind.

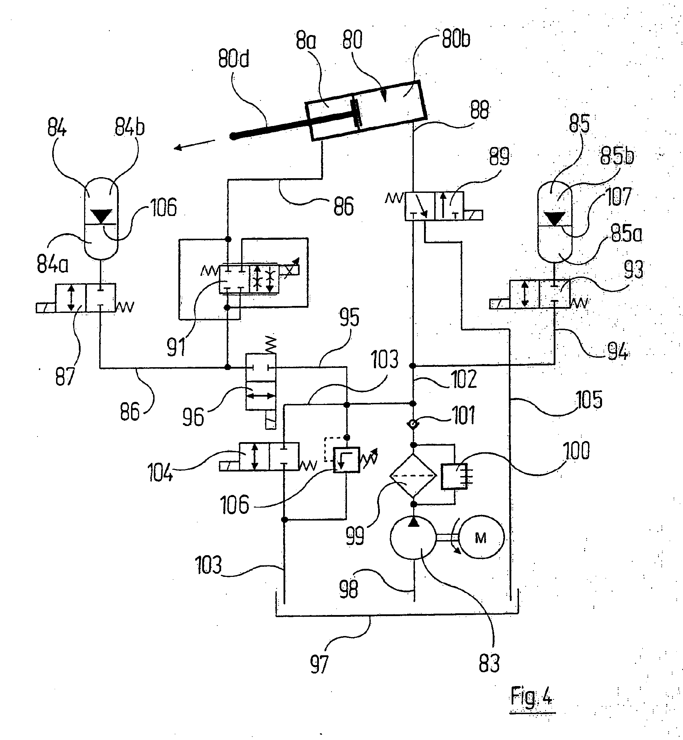

Die Funktionsweise des hydraulischen Antriebs für die Schwenkbewegung der Schwenkarme 50, 51 wird nunmehr anhand des in Figur 4 gezeigten Hydraulikschemas erläutert. In dieser Figur sind schematisch die Kolben-Zylinder-Einheit 80 mit der Kolbenstange 80d, die beiden Druckspeicher 84, 85 und die Hydraulikpumpe 83 wieder zu finden.

Einer der beiden Arbeitsräume 80a, 80b, der Kolben-Zylinder-Einheit 80, die durch deren Kolben 80c voneinander getrennt sind, nämlich der Arbeitsraum 80a, ist über eine Leitung 86 und ein magnetisches 2/4-Wegeventil 91 und ein magnetisches 2/2-Wegeventil 87 mit dem Druckspeicher 84 verbunden. Das 2/2-Wegeventil 87 wird normalerweise durch Bestromung in der dargestellten Offenstellung gehalten und nur zu den nachfolgend beschriebenen Zwecken sowie bei Ausfall des Stromes in die Schließstellung gebracht.

Die Funktion des 2/4-Wegeventils 91 wird weiter unten näher beschrieben. Zunächst reicht es zu wissen, dass es durch seine leitungsmäßige "Beschaltung", wie in Figur 4 dargestellt, funktional die Rolle eines 2/2-Wegeventils erfüllt, das in der einen Stellung die Leitung 86 unterbricht und in der anderen Stellung ein regelbares Drosselventil in der Leitung 86 bildet. Die Ausbildung als 2/4 Wegeventil 91 hat nur den Sinn einer Kapazitätsvergrößerung.

Der zweite Arbeitsraum 80b der Kolben-Zylinder-Einheit 80 steht über eine Leitung 88 mit einem magnetischen 2/3-Wegeventil 89 in Verbindung.

Der zweite Druckspeicher 85 ist über ein weiteres, in oben beschriebener Weise betriebenes 2/2-Wegeventil 93, das in einer Leitung 94 liegt, mit einem Anschluss des 2/3-Wegeventils 91 verbunden. Eine weitere Verbindung besteht über eine Leitung 95 sowie ein weiteres magnetisches 2/2-Wegeventil 96 zu der Leitung 86 und damit mittelbar zum ersten Druckspeicher 84.

Die Hydraulikpumpe 83 saugt Hydraulikflüssigkeit aus einem Flüssigkeitstank 97 über eine Leitung 98 an und führt diese über ein Filter 99, dem ein den Verschmutzungsgrad des Filters 99 überwachender Druckschalter 100 parallelgeschaltet ist, sowie über ein Rückschlagventil 101 und ein Leitungsstück 102 einem zweiten Anschluss des 2/3-Wegeventiles 89 zu. Über eine weitere Leitung 103, in der ein weiteres magnetisches 2/2-Wegeventil 104 liegt, das normalerweise geschlossen ist, kann die Hydraulikflüssigkeit direkt wieder in den Flüssigkeitstank 97 zurückgeführt werden. Dem 2/2-Wegeventil 104 ist ein Druckbegrenzungsventil 106 parallel geschaltet.

Der dritte Anschluss des 2/3-Wegeventils 89 ist über eine weitere Leitung 105 ebenfalls mit dem Flüssigkeitstank 97 verbunden.

Die beiden Druckspeicher 84, 85 sind in derselben Weise gebaut. Sie besitzten jeweils eine Membran 106 bzw. 107, durch welche der Innenraum des jeweiligen Druckspeichers 84, 85 in einen mit Hydraulikflüssigkeit gefüllten, mit dem entsprechenden 2/2-Wegeventil 87 bzw. 93 verbundenen Arbeitsraum 84a bzw. 85a und einen zweiten, in sich geschlossenen Arbeitsraum 84b bzw. 85b unterteilt wird, der mit unter Druck stehendem Gas gefüllt ist. Der Druck des im ersten Druckspeichers 84 befindlichen Gases reicht, wenn die Verbindung zum Arbeitsraum 80a der Kolben-Zylinder-Einheit 80 offen ist, dazu aus, den Kolben 80c in Figur 4 nach rechts und damit die Schwenkarme 50, 51 in ihre obere Position zu drücken, wenn der Druck im andern Arbeitsraum 80b ausreichend niedrig, insbesondere auch null, ist. Mit anderen Worten: Aufgrund des Druckes des Gases im Arbeitsraum 84b des Druckspeichers 84 ist sichergestellt, dass immer dann, wenn im gegenüberliegenden Arbeitsraum 80b der Kolben-Zylinder-Einheit 80 nicht ein größerer Druck vorliegt, die Tragestreben 70, 71 und die daran befestigte Fahrzeugkarosserie in ihrer obersten Position, also außerhalb des Behandlungsbades sind. Dies stellt ein wichtiges Sicherheitsmerkmal für den Fall dar, dass mit Hilfe der Hydraulikpumpe 83 kein Hydraulikdruck erzeugt werden kann, beispielsweise, wenn der elektrische Strom ausfällt oder ein sonstiger Fehler in den hydraulischen oder elektrischen Komponenten auftritt.

Nachfolgend sei von einer Situation ausgegangen, in welcher, wie in Figur 4 dargestellt, der Druckspeicher 84 über das geöffnete 2/2-Wegeventil 87 und das in der Drosselstellung befindliche 2/4-Wegeventil 91 mit dem Arbeitsraum 80a der Kolben-Zylinder-Einheit 80 verbunden und die Fahrzeugkarosserie angehoben ist. Das 2/3-Wegeventil 89 befindet sich in der in Figur 4 dargestellten Position, in welcher der zweite Arbeitsraum 80b der Kolben-Zylinder-Einheit 80 über die Leitung 105 mit dem Flüssigkeitstank 07 verbunden ist. Dabei muss selbstverständlich das 2/2-Wegeventil 96 geschlossen sein. Die Schließstellung dieses 2/2-Wegeventiles 96 ist im Übrigen die Normalstellung. Es wird nur ausnahmsweise geöffnet, wenn der Hydraulikdruck im Arbeitsraum 84a des ersten Druckspeichers 84 im Laufe der Zeit durch Leckagen abgesunken ist und wieder mit Hilfe der Hydraulikpumpe 83 angehoben werden soll.

Der zweite Druckspeicher 85 wird im Wesentlichen kontinuierlich mit Hilfe der Hydraulikpumpe 83 über das Filter 99, das Rückschlagventil 101, die Leitung 94 und das 2/2-Wegeventil 93 in seinem Arbeitsraum 85a auf Druck gebracht. Dazu muss selbstverständlich das 2/2-Wegeventil 93, anders als in der Zeichnung dargestellt, in seiner Offenposition sein. Da dies über verhältnismäßig lange Zeiträume geschehen kann, auch während der Stillstandszeiten der Anlage, in welcher die Schwenkarme 50, 51 nicht verschwenkt werden, kann die Leistung der Hydraulikpumpe 83 verhältnismäßig klein gehalten werden.

Nunmehr sei angenommen, dass die Schwenkarme 50, 51 des Transportwagens 50 nach unten verschwenkt werden sollen, wobei die Fahrzeugkarosserie in die Behandlungsflüsskgeit eingetaucht wird. Hierzu wird mit Hilfe des 2/3-Wegeventils 89 bei geöffnetem 2/2-Wegeventil 93 sowohl eine Verbindung zwischen dem Arbeitsraum 85a des zweiten Druckspeichers 85 und dem Arbeitsraum 80b der Kolben-Zylinder-Einheit 80 als auch eine Verbindung zwischen diesem Arbeitsraum 80b und - über das Rückschlagventil 101 und das Filter 99 - der Hydraulikpumpe 83 hergestellt. Sobald auf diese Weise der Druck im Arbeitsraum 80b der Kolben-Zylinder-Einheit 80 den Druck im Arbeitsraum 80a übersteigt, wird der Kolben 80c in Figur 4 nach links verschoben. Dies hat zur Folge, dass die Schwenkarme 50, 51 in der gewünschten Weise nach unten verschwenkt werden. Die Geschwindigkeit dieser Schwenkbewegung wird durch die von dem 2/4-Wegeventil 91 bereitgestellte Drosselung bestimmt.

Sobald die Fahrzeugkarosserie ausreichend tief in das Behandlungsbad eingetaucht ist, wird die Schwenkbewegung der Schwenkarme 50, 51 nach unten unterbrochen, indem das 2/4-Wegeventil 91 in die Schließstellung gebracht wird.

Wenn die Schwenkarme 50, 51 wieder nach oben verschwenkt werden sollen, wodurch die Fahrzeugkarosserie aus dem Behandlungsbad nach oben ausgehoben wird, wird das 2/4-Wegeventil 91 in die Drosselstellung gebracht und das 2/ 3-Wegeventil 89 so verstellt, dass die in dem Arbeitsraum 80b der Kolben-Zylinder-Einheit 80 befindliche Hydraulikflüssigkeit über die Leitung 88 und die Leitung 105 in den Flüssigkeitstank 97 abfließen kann. Die Geschwindigkeit dieser Anhebebewegung wird wiederum durch die jeweilige Drosselung bestimmt, die in dem 2/4-Wegeventil 91 stattfindet. Das 2/2-Wegeventil 93 ist bei dieser Schwenkbewegung der Schwenkarme 50, 51 nach oben, die einer Bewegung des Kolbens 80c in Figur 4 nach rechts entspricht und ausschließlich auf den Gasdruck im Arbeitsraum 84b des ersten Druckspeichers 84 zurückzuführen ist, geschlossen.

Falls hierzu Bedarf ist, kann in Arbeitspausen des Transportwagens 5 die im Flüssigkeitstank 97 befindliche Hydraulikflüssigkeit mit Hilfe der Hydraulikpumpe 83 über das Filter 99, das Rückschlagventil 101, das geöffnete 2/2-Wegeventil 104 und die Leitung 103 im Kreise geführt werden und dabei im Filter 99 gereinigt werden. Sollte der Druckabfall im Filter 99 aufgrund von Verunreinigungen zu hoch werden, spricht der Druckschalter 100 an und löst ein Alarmsignal aus.

Das oben anhand der Figur 4 beschriebene Hydraulikschema eignet sich, wenn als Hydraulikflüssigkeit ein Wasser-Glykol-Gemisch (HFC) eingesetzt wird. Der Wassergehalt sollte dabei über 35 % liegen. Eine solche Hydraulikflüssigkeit ist nicht nur schwer entflammbar und besitzt zwischen minus 20°C und plus 60°C einen großen Temperatur-Einsatzbereich, sondern ist auch mit den üblicherweise in der Automobilindustrie zur Beschichtung von Fahrzeugkarosserien verwendeten Beschichtungsmaterialien, insbesondere Lacken, verträglich. Sollten daher Undichtigkeiten in dem Hydrauliksystem auftreten und kleine Mengen der Hydraulikflüssigkeit in das Behandlungsbad übergehen, so wäre dies unschädlich.

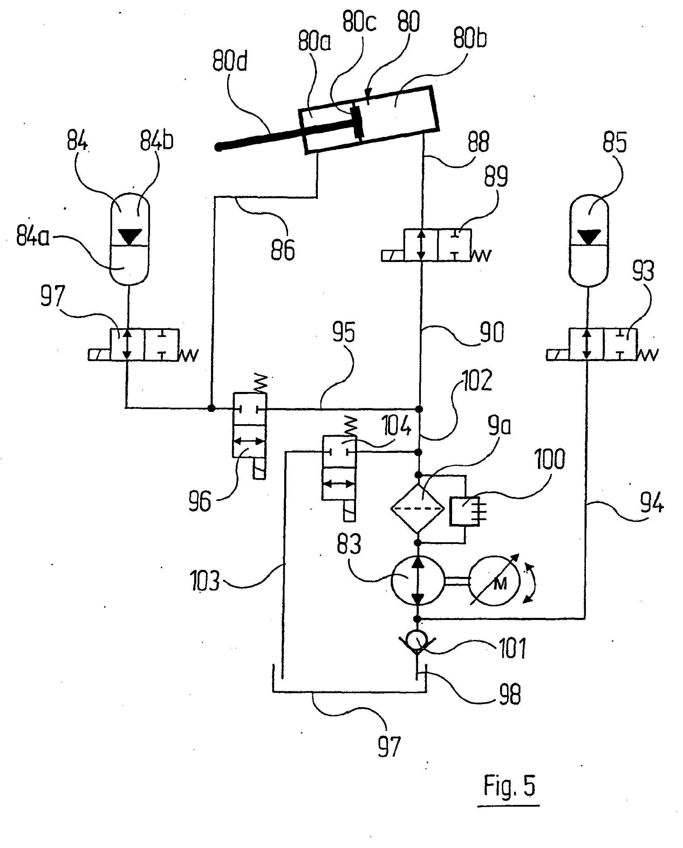

In Figur 5 ist ein alternatives Hydrauliksystem dargestellt, welches sich insbesondere zum Einsatz mit reinem Wasser als Hydraulikflüssigkeit eignet. Grund dafür, dass hier eine andere Ausgestaltung des Hydrauliksystemes gewählt wird, ist, dass gute Proportionalventile für Wasser nicht verfügbar sind.

Das Hydraulikschema der Figur 5 unterscheidet sich in weiten Bereichen nicht von demjenigen, das in Figur 4 dargestellt ist. Es werden daher für Komponenten in Figur 5, die solchen der Figur 4 entsprechen, dieselben Bezugszeichen verwendet. Die nachfolgende Beschreibung beschränkt sich auf die Unterschiede.

Da, wie erwähnt, bei Verwendung von Wasser als Hydraulikflüssigkeit der Einsatz von Proportionalventilen nicht in Frage kommt, findet sich beim Hydraulikschema der Figur 5 ein solches nicht mehr. Statt dessen wird eine frequenzgeregelte Zweiquadrantenpumpe 83 eingesetzt, bei welcher die Pumpleistung über die Motordrehzahl regelbar ist. Der zweite Druckspeicher 85 ist über das ihm zugeordnete 2/2-Wegeventil 93 mit der Saugseite der Hydraulikpumpe 83 verbunden und zwar stromab von dem Rückschlagventil 101, das seinerseits über die Leitung 98 mit dem Flüssigkeitstank 97 in Verbindung steht.

Die Funktionsweise des Hydraulikschemas nach Figur 5 stimmt weitestgehend mit derjenigen des Hydraulikschemas von Figur 4 überein. Überhaupt keine Unterschiede gibt es beim Anheben der Schwenkarme 50, 51, bei welchem über das 2/2-Wegeventil 97 bei geschlossenem 2/2-Wegeventil 96 der erste Druckspeicher 84 mit dem Arbeitsraum 80a der Kolben-Zylinder-Einheit 80 verbunden ist und der Kolben 80c in Figur 5 nach rechts gedrückt wird.

Erneut ist es möglich, mit Hilfe der Hydraulikpumpe 83 bei geschlossenen 2/2-Wegeventilen 89 und 104 und geöffnetem 2/2-Wegeventil 93 in Arbeitspausen des Transportwagens 5 den Druckspeicher 85 zu füllen, wodurch die von der Hydraulikpumpe 83 geforderte Leistung reduziert werden kann. Die Förderrichtung der Hydraulikpumpe 83 wird dabei durch Umkehr der Drehrichtung umgekehrt.

Zum Absenken der Schwenkarme 50, 51 werden die 2/2-Wegeventile 93 und 89 bei weiterhin geschlossenem 2/2-Wegeventil 104 geöffnet. Die Saugseite der Hydraulikpumpe 83 befindet sich dabei schon auf dem Druck, der zuvor in dem Druckspeicher 85 geherrscht hat, so dass die Hydraulikpumpe 83 nur noch eine geringe Druckdifferenz hinzuzufügen hat, um den im Arbeitsraum 80a der Kolben-Zylinder-Einheit 80 herrschenden Druck zu überwinden und den Kolben 80c zum Absenken der Fahrzeugkarosserie in Figur 5 nach links zu schieben. Die Geschwindigkeit dieser Absenkbewegung wird durch die Drehzahl der Hydraulikpumpe 83 bestimmt.

Die Geschwindigkeit der Abwärtsbewegung der Fahrzeugkarosserie bei der Bewegung des Kolbens 80c in Figur 5 nach rechts wird durch eine feste, beispielsweise durch die 2/2-Wegeventile 89, 104 in deren Offenstellung vorgegebene Drosselung bestimmt.

Auch bei dem Ausführungsbeispiel der Figur 5 ist es möglich, mithilfe der Hydraulikpumpe 83 die Hydraulikflüssigkeit, in diesem Falle also das Wasser, über das Filter 99 und das geöffnete 2/2-Wegeventil 104 zirkulieren zu lassen und dabei zu reinigen.

## Patentansprüche

1. Anlage zum Behandeln, insbesondere zum kataphoretischen Tauchlackieren, von Gegenständen, insbesondere von Fahrzeugkarosserien mit
a) mindestens einem Behandlungsbehälter, in dem die Gegenstände mit einem Behandlungsmedium beaufschlagbar sind;
b) mindestens einem Transportwagen, welcher mindesteins einen Gegenstand in einer Translationsbewegung durch die Anlage führt, diesen dabei in den Behandlungsbehälter ein- und aus diesem ausbringt und seinerseits umfasst:
ba) ein verfahrbares Fahrwerk;
bb) mindestens einen an das Fahrwerk angelenkten Schwenkarm;
bc) eine an dem Schwenkarm befestigte Halteung für den Gegenstand;
bd) eine Antriebseinrichtung für die Translalationsbewegung des Fahrwerks;
be) eine Antriebseinrichtung für die Schwenkbewegung des Schwenkarms;
bf) eine Gewichts-Ausgleichseinrichtung, mit welcher die Kraft, die zum Verschwenken des Schwenkarms erforderlich ist, reduziert ist und die einen Energiespeicher umfasst, in dem die mit der Absenkung des Gegenstandes verbundene Energie zwischenspeicherbar und aus dem die zwischengespeicherte Energie bei der Aufwärtsbewegung des Gegenstandes wieder abrufbar ist,
**dadurch gekennzeichnet, dass**
c) die Antriebseinrichtung für den Schwenkarm (50, 51) und die Gewichts-Ausgleichseinrichtung zusammen von mindestens einer hydraulisch arbeitenden Kolben-Zylinder-Einheit (80) gebildet sind, die einen ersten Arbeitsraum (80a) besitzt, der sich bei der Abwärtsbewegung des Schwenkarms (50, 51) verkleinert und in einem geschlossenen System mit einem ersten Druckspeicher (84) verbunden ist, sowie einen zweiten Arbeitsraum (80b), der sich bei der Abwärtsbewegung des Schwenkarms (50, 51) vergrößert und mit einer Quelle (83, 85) unter Druck stehender Hydraulikflüssigkeit verbunden ist und bei der Aufwärtsbewegung des Schwenkarms (50, 51) in einen Flüssigkeitstank (97) entleerbar ist;
wobei
d) der Druck der Hydraulikflüssigkeit in dem ersten Druckspeicher (84) ausreicht, den Schwenkarm (50, 51) samt Gegenstand nach oben zu schwenken, wenn der Druck im zweiten Arbeitsraum (80b) der Kolben-Zylinder-Einheit (80) unter einen bestimmten Wert abgesenkt ist.

2. Anlage nach Anspruch 1, **dadurch gekennzeichnet,**
**dass** die Quelle (83, 85) für unter Druck stehende Hydraulikflüssigkeit eine Hydraulikpumpe (83) und einen zweiten Druckspeicher (85) umfasst.

3. Anlage nach Anspruch 1 oder 2, **dadurch gekennzeichnet, dass** jeder Druckspeicher (84, 85) eine Membran (106, 107) enthält, welche seinen Innenraum in einen mit Hydraulikflüssigkeit gefüllten ersten Arbeitsraum (84a, 85a) und einen mit Gas gefüllten zweiten Arbeitsraum (84b, 85b) unterteilt.

4. Anlage nach einem der Ansprüche 1 bis 3, **dadurch gekennzeichnet, dass** im Strömungsweg zwischen dem zweiten Arbeitsraum (80b) der Kolben-Zylinder-Einheit (80) und der Druckquelle (83, 85) oder im Strömungsweg zwischen dem ersten Arbeitsraum (80a) der Kolben-Zylinder-Einheit (80) und dem ersten Druckspeicher (84) ein Proportionalventil (91) liegt, über welches die Geschwindigkeit der Schwenkbewegung des Schwenkarms (50, 51) einstellbar ist.

5. Anlage nach einem der Ansprüche 1 bis 4, **dadurch gekennzeichnet, dass** die Hydraulikflüssigkeit ein Wasser-Glykol-Gemisch mit einem Wasseranteil von mehr als 35 Gewichtsprozent ist.

6. Anlage nach Anspruch 2 oder 3, **dadurch gekennzeichnet, dass** die Hydraulikpumpe (82) eine frequenzgeregelte Zweiquadrantenpumpe ist.

7. Anlage nach Anspruch 6, **dadurch gekennzeichnet, dass** die Hydraulikflüssigkeit reines Wasser ist.

8. Anlage nach einem der Ansprüche 1 bis 7, **dadurch gekennzeichnet, dass** der erste Druckspeicher (84) mit der Hydraulikpumpe (83) verbindbar ist.

9. Anlage nach einem der Ansprüche 1 bis 8, **dadurch gekennzeichnet, dass** der zweite Druckspeicher (85) während der Stillstandszeiten der Kolben-Zylinder-Einheit (80) mit der Hydraulikpumpe (83) verbindbar ist.

## Claims

1. A system for the treatment, in particular the cataphoretic dip coating, of objects, in particular vehicle bodies having
a) at least one treatment container, in which a treatment medium can be applied to the objects;
b) at least one transport carriage, which guides at least one object in a translatory movement through the system, thereby introducing this object into, and removing it from, the treatment container, and which in turn comprises:
ba) a moveable chassis;
bb) at least one swivel arm connected to the chassis in an articulated manner;
bc) a holding means for the object, which is fixed to to the swivel arm;
bd) a drive device for the translatory movement of the chassis;
be) a drive device for the swivel movement of the swivel arm;
bf) a weight balancing device by means of which the force required to swivel the swivel arm is reduced and which comprises an energy accumulator in which the energy associated with the lowering of the object can be buffered and from which the buffered energy can be retrieved again during the upward movement of the object,
**characterised in that**
c) the drive device for the swivel arm (50, 51) and the weight balancing device are formed together by at least one hydraulically operating piston-cylinder unit (80) which has a first working chamber (80a) which diminishes during the downward movement of the swivel arm (50, 51) and is connected in a closed system to a first pressure accumulator (84), and a second working chamber (80b) which increases during the downward movement of the swivel arm (50, 51) and is connected to a source (83, 85) of pressurised hydraulic fluid and can be emptied into a fluid tank (97) during the upward movement of the swivel arm (50, 51);
wherein
d) the pressure of the hydraulic fluid in the first pressure accumulator (84) is sufficient to swivel the swivel arm (50, 51) together with the object upwards when the pressure in the second working chamber (80b) of the piston-cylinder unit (80) has dropped below a particular value.

2. A system according to Claim 1, **characterised in that** the source (83, 85) for pressurised hydraulic fluid comprises a hydraulic pump (83) and a second pressure accumulator (85).

3. A system according to Claim 1 or 2, **characterised in that** each pressure accumulator (84, 85) contains a diaphragm (106, 107) which divides its interior into a first working chamber (84a, 85a) filled with hydraulic fluid and a second working chamber (84b, 85b) filled with gas.

4. A system according to one of Claims 1 to 3 **characterised in that**, located in the flow path between the second working chamber (80b) of the piston-cylinder unit (80) and the pressure source (83, 85) or in the flow path between the first working chamber (80a) of the piston-cylinder unit (80) and the first pressure accumulator (84), there is a proportional valve (91) by way of which the speed of the swivel movement of the swivel arm (50, 51) can be adjusted.

5. A system according to one of Claims 1 to 4, **characterised in that** the hydraulic fluid is a water/glycol mixture with a water content of more than 35 percent by weight.

6. A system according to Claim 2 or 3, **characterised in that** the hydraulic pump (82) is a frequency-controlled two quadrant pump.

7. A system according to Claim 6, **characterised in that** the hydraulic fluid is pure water.

8. A system according to one of Claims 1 to 7, **characterised in that** the first pressure accumulator (84) can be connected to the hydraulic pump (83).

9. A system according to one of Claims 1 to 8, **characterised in that** the second pressure accumulator (85) can be connected to the hydraulic pump (83) during the idle times of the piston-cylinder unit (80).

## Revendications

1. Installation de traitement, notamment dévolue au laquage cataphorétique par immersion d'objets, en particulier de carrosseries de véhicules, comprenant
a) au moins une cuve de traitement dans laquelle les objets peuvent être sollicités par un agent de traitement ;
b) au moins un chariot de transport qui guide au moins un objet en un mouvement de translation à travers l'installation, introduit alors ledit objet dans la cuve de traitement et l'extrait de cette dernière, et inclut à son tour :
ba) un châssis de roulement déplaçable ;
bb) au moins un bras pivotant articulé sur ledit châssis de roulement ;
bc) un système de retenue dédié à l'objet et fixé audit bras pivotant ;
bd) un dispositif d'entraînement affecté au mouvement de translation dudit châssis de roulement ;
be) un dispositif d'entraînement affecté au mouvement de pivotement dudit bras pivotant ;
bf) un dispositif d'équilibrage pondéral qui a pour effet de réduire la force requise pour faite pivoter ledit bras pivotant, et qui inclut un accumulateur d'énergie dans lequel l'énergie liée à l'abaissement de l'objet peut être accumulée provisoirement, et à partir duquel l'énergie provisoirement accumulée peut être récupérée lors du mouvement ascendant dudit objet,
**caractérisée par le fait que**
c) le dispositif d'entraînement dédié au bras pivotant (50, 51), et le dispositif d'équilibrage pondéral, sont conjointement formés par au moins un vérin (80) à fonctionnement hydraulique comprenant une première chambre de travail (80a) dont la taille diminue lors du mouvement descendant du bras pivotant (50, 51), et qui est raccordée à un premier accumulateur de pression (84) dans un système fermé, ainsi qu'une seconde chambre de travail (80b) dont la taille augmente lors dudit mouvement descendant du bras pivotant (50, 51), est raccordée à une source (83, 85) de fluide hydraulique pressurisé, et peut être vidée vers un réservoir (97) à fluide lors du mouvement ascendant dudit bras pivotant (50, 51) ; sachant que
d) la pression du fluide hydraulique régnant dans le premier accumulateur de pression (84) suffit pour faire pivoter ledit bras pivotant (50, 51) vers le haut, conjointement à l'objet, lorsque la pression régnant dans la seconde chambre de travail (80b) du vérin (80) a chuté en deçà d'une valeur déterminée.

2. Installation selon la revendication 1, **caractérisée par le fait que** la source (83, 85), affectée à du fluide hydraulique pressurisé, inclut une pompe hydraulique (83) et un second accumulateur de pression (85).

3. Installation selon la revendication 1 ou 2, **caractérisée par le fait que** chaque accumulateur de pression (84, 85) contient une membrane (106, 107) scindant son espace intérieur en une première chambre de travail (84a, 85a) emplie de fluide hydraulique, et en une seconde chambre de travail (84b, 85b) emplie de gaz.

4. Installation selon l'une des revendications 1 à 3, **caractérisée par** la présence, sur le trajet d'écoulement entre la seconde chambre de travail (80b) du vérin (80) et la source de pression (83, 85), ou sur le trajet d'écoulement entre la première chambre de travail (80a) dudit vérin (80) et le premier accumulateur de pression (84), d'une vanne (91) à action proportionnelle permettant de régler la vitesse du mouvement de pivotement du bras pivotant (50, 51).

5. Installation selon l'une des revendications 1 à 4, **caractérisée par le fait que** le fluide hydraulique est un mélange d'eau et de glycol, qui renferme une teneur en eau excédant 35 pour cent en poids.

6. Installation selon la revendication 2 ou 3, **caractérisée par le fait que** la pompe hydraulique (83) est une pompe à deux quadrants à fréquence régulée.

7. Installation selon la revendication 6, **caractérisée par le fait que** le fluide hydraulique est de l'eau pure.

8. Installation selon l'une des revendications 1 à 7, **caractérisée par le fait que** le premier accumulateur de pression (84) peut être raccordé à la pompe hydraulique (83).

9. Installation selon l'une des revendications 1 à 8, **caractérisée par le fait que** le second accumulateur de pression (85) peut être raccordé à la pompe hydraulique (83) durant les périodes de mise à l'arrêt du vérin (80).
